# EUROPEAN PATENT APPLICATION

(11) **EP 4 761 224 A1**
(43) Date of publication of application: **17.06.2026**
(21) Application number: 24932087.0
(22) Date of filing: 17.12.2024
(51) Int. Cl.: H04M 1/72484

(54) **DISPLAY METHOD AND ELECTRONIC DEVICE**

(30) Priority: 28.03.2024 CN 202410377103
(71) Applicant: HUAWEI TECHNOLOGIES CO., LTD., Shenzhen 518129 (CN)
(72) Inventor: HWANG, Wooseok, Shenzhen, Guangdong 518129 (CN); WOO, Shinyeong, Shenzhen, Guangdong 518129 (CN); TAI, Yankun, Shenzhen, Guangdong 518129 (CN)
(74) Representative: Gill Jennings & Every LLP
(86) International application number: PCT/CN2024/140079
(87) International publication number: WO 2025/200620

(57) **Abstract**

This application provides a display method and an electronic device, and relates to the field of terminal technologies, to resolve a problem of a monotonous visual effect during a call. The display method is applied to a first electronic device. The first electronic device is an electronic device with a foldable screen. The display method includes: The first electronic device receives a call request from a second electronic device; and the first electronic device connects, in response to an answering operation of a user, a call corresponding to the call request and displays a call motion effect, where the call motion effect is displayed on an outer screen of the first electronic device, the outer screen of the first electronic device is a screen that does not face the user, and the call motion effect represents a user status during the call. This application is applied to a display process of an electronic device.

## Description

This application claims priority to Chinese Patent Application No. 202410377103.3, filed with the China National Intellectual Property Administration March 28, 2024 and entitled "DISPLAY METHOD AND ELECTRONIC DEVICE", which is incorporated herein by reference in its entirety.

### TECHNICAL FIELD

Embodiments of this application relate to the field of terminal technologies, and in particular, to a display method and an electronic device.

### BACKGROUND

With development of terminal technologies, electronic devices with foldable screens are widely used in daily life of users, providing the users with display experience of a larger display screen. When a user makes a call by using an electronic device with a foldable screen, an outer screen of the foldable screen usually displays a black screen, and a visual effect is monotonous.

### SUMMARY

This application provides a display method and an electronic device, to enrich a visual effect during a call, increase fun of the call, enhance user interaction experience, and improve user experience.

To achieve the foregoing technical objective, this application provides the following technical solutions.

According to a first aspect, this application provides a display method, applied to a first electronic device, where the first electronic device is an electronic device with a foldable screen. The display method includes: The first electronic device receives a call request from a second electronic device; and the first electronic device connects, in response to an answering operation of a user, a call corresponding to the call request and displays a call motion effect, where the call motion effect is displayed on an outer screen of the first electronic device, the outer screen of the first electronic device is a screen that does not face the user, and the call motion effect represents a user status during the call.

In this application, during the call between the first electronic device and the second electronic device, the outer screen of the first electronic device displays the call motion effect. During the call, the call motion effect displayed on the outer screen of the first electronic device increases fun of the call, expresses call emotion of the user in a personalized manner, enhances user interaction experience, and improves user experience.

According to the first aspect, the first electronic device is an electronic device that can implement a call function and has a foldable screen.

According to any one of the first aspect or the foregoing implementations of the first aspect, the second electronic device is an electronic device that can implement a call function. The second electronic device may be an electronic device with a foldable screen, or may be an electronic device with a non-foldable screen.

In some examples, the call request includes but is not limited to a voice call request and a video call request. The call request may be a single-user call request, or may be a multi-user call request.

In a possible implementation, the call request is the single-user call request, and there is one first electronic device and one second electronic device. The second electronic device sends the single-user call request to the first electronic device.

In another possible implementation, the call request is the multi-user call request, there may be a plurality of first electronic devices, and there is one second electronic device. The second electronic device sends the multi-user call request to the plurality of first electronic devices.

In some examples, the call motion effect is a special effect or an animation effect displayed on the outer screen of the first electronic device when the first electronic device is on a call. The call motion effect represents a user status during the call. The user status may be understood as an emotion status of the user during a call, and reflects mood of the user during a call.

In some examples, the outer screen of the first electronic device is the screen that does not face the user.

According to any one of the first aspect or the foregoing implementations of the first aspect, the first electronic device includes a first screen and a second screen, the first screen and the second screen face away from each other, and the user faces the first screen. That the first electronic device connects the call corresponding to the call request and displays the call motion effect includes: The first electronic device connects the call corresponding to the call request, the first screen displays a call interface, and the second screen displays the call motion effect. The second screen is the outer screen of the first electronic device.

In some examples, when the user uses the first electronic device to make a call, if the first electronic device is in an unfolded state, an entire foldable screen facing the user is the first screen. If a screen, namely, the second screen, is further disposed on a surface that faces away from the user, the second screen that is of the first electronic device and that faces away from the user is the outer screen of the first electronic device. The first screen facing the user displays the call interface, and the second screen facing away from the user displays the call motion effect.

In some other examples, when the user uses the first electronic device to make a call, if the first electronic device is in a folded state, a part of a foldable screen, namely, the first screen, faces the user. If there is still a screen, namely, the second screen, on a surface that faces away from the user, the second screen that is of the first electronic device and that faces away from the user is the outer screen of the first electronic device. The first screen facing the user displays the call interface, and the second screen facing away from the user displays the call motion effect.

According to any one of the first aspect or the foregoing implementations of the first aspect, the user does not face the first electronic device, and that the first electronic device connects the call corresponding to the call request and displays the call motion effect includes: The first electronic device connects the call corresponding to the call request, where a currently displayed screen of the first electronic device first displays the call interface and then displays the call motion effect; and the currently displayed screen is the outer screen of the first electronic device.

In some examples, when the first electronic device connects the call corresponding to the call request, and the user does not face the first electronic device, the outer screen of the first electronic device is the currently displayed screen of the first electronic device. The currently displayed screen of the first electronic device first displays the call interface and then displays the call motion effect.

In this application, during a call, a call motion effect dynamically changes with a manner in which a user uses the first electronic device and is more flexible.

According to any one of the first aspect or the foregoing implementations of the first aspect, the method further includes: determining a posture of the first electronic device; and determining, based on a correspondence between the posture of the first electronic device and the outer screen of the first electronic device, the outer screen that is of the first electronic device and that corresponds to a current posture.

In some examples, the first electronic device stores the correspondence between the posture of the first electronic device and the outer screen of the first electronic device.

In some examples, the first electronic device determines the posture of the first electronic device by using a sensor, and determines, based on the correspondence between the posture of the first electronic device and the outer screen of the first electronic device, the outer screen of the first electronic device corresponding to the current posture.

In some other examples, the first electronic device may determine, by using a current touch location that is of the user and that is reported by a touch component and by using a preset grip algorithm, a grip posture with which the user currently grips a mobile phone, and determine the posture of the first electronic device based on the grasp posture. The outer screen of the first electronic device is determined based on the posture of the first electronic device.

In this application, the outer screen of the first electronic device is quickly determined based on the current posture of the first electronic device, so that a call motion effect display speed can be increased, and quick display can be implemented.

According to any one of the first aspect or the foregoing implementations of the first aspect, after the first electronic device connects, in response to an answering operation of the user, the call corresponding to the call request and displays the call motion effect, the method further includes: obtaining a call voice of the user, and adjusting the call motion effect based on the call voice.

In some examples, the first electronic device obtains the call voice of the user and adjusts the call motion effect based on a speed or volume of the call voice, or a keyword in the call voice.

In some other examples, the first electronic device obtains the call voice of the user and adjusts the call motion effect by using a voice analysis technology.

In this application, the call motion effect is adaptively adjusted based on a specific call status of the user, and a speed and rhythm of the call motion effect are changed, so that emotion of the user during a call and personality of the user can be vividly and expressively indicated, and fun of a call can be increased.

According to the first aspect or any one of the foregoing implementations of the first aspect, the call motion effect is a display motion effect that is pre-configured in the first electronic device and displayed when the device is on a call; or the call motion effect is a display motion effect that is customized by the user and displayed when the device is on a call.

In this application, the first electronic device may provide rich and diversified call motion effects, so that the first electronic device becomes more interesting during a call and can attract more attention, and user retention is improved. In addition, a vivid, natural, and expressive visual motion effect is used, so that sensory experience of the user can be enhanced, and user experience can be improved.

According to any one of the first aspect or the foregoing implementations of the first aspect, the first electronic device displays different call motion effects based on different second electronic devices.

According to a second aspect, this application provides an electronic device. The electronic device includes a processor, a memory, and a display screen. The memory and the display screen are coupled to the processor. The memory is configured to store computer program code. The computer program code includes computer instructions. When the processor reads the computer instructions from the memory, the electronic device is enabled to perform the method according to any one of the first aspect or the implementations of the first aspect.

According to a third aspect, this application provides a chip system, including at least one processor and at least one interface circuit. The at least one interface circuit is configured to: implement a transceiver function and send instructions to the at least one processor. When the at least one processor executes the instructions, the at least one processor performs the method according to the first aspect or any implementation of the first aspect.

According to a fourth aspect, this application provides a computer-readable storage medium. The computer-readable storage medium includes a computer program or instructions. When the computer program or the instructions are run on a computer, the computer is enabled to perform the method according to any one of the first aspect or the implementations of the first aspect.

According to a fifth aspect, this application provides a computer program product. The computer program product includes a computer program or instructions. When the computer program or the instructions are run on a computer, the computer is enabled to perform the method according to any one of the first aspect or the implementations of the first aspect.

It should be noted that, for technical effects brought by any one of the designs of the second aspect to the fifth aspect, refer to technical effects brought by corresponding designs in the first aspect. Details are not described herein again.

### BRIEF DESCRIPTION OF DRAWINGS

FIG. 1 is a diagram of a hardware structure of an electronic device according to an embodiment of this application;
FIG. 2 is a schematic flowchart of a display method according to an embodiment of this application;
FIG. 3 is a diagram of a call motion effect according to an embodiment of this application;
FIG. 4 is a diagram 1 of a scenario instance of a display method according to an embodiment of this application;
FIG. 5 is a diagram 2 of a scenario instance of a display method according to an embodiment of this application;
FIG. 6 is a diagram 3 of a scenario instance of a display method according to an embodiment of this application;
FIG. 7 is a diagram 4 of a scenario instance of a display method according to an embodiment of this application;
FIG. 8 is a diagram 5 of a scenario instance of a display method according to an embodiment of this application;
FIG. 9 is a diagram 6 of a scenario instance of a display method according to an embodiment of this application;
FIG. 10 is a diagram of a structure of an electronic device according to an embodiment of this application; and
FIG. 11 is a diagram of a structure of a chip system according to an embodiment of this application.

### DESCRIPTION OF EMBODIMENTS

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

In the descriptions of embodiments of this application, unless otherwise specified, "a plurality of" means two or more than two. In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Specifically, the term such as "example" or "for example" is intended to present a related concept in a specific manner.

Currently, electronic devices (for example, mobile phones or computers) may be roughly classified, based on display screens, into electronic devices with foldable screens (also referred to as flexible screen electronic devices or foldable-screen electronic devices) and electronic devices with non-foldable screens.

Correspondingly, there are two device forms of the electronic devices with the foldable screens, the two device forms are respectively a folded state and an unfolded state. An electronic device with a foldable screen includes a plurality of sub-screens, and the electronic device with the foldable screen folds along a folding edge or a folding shaft (which may also be described as a hinge) to form the plurality of sub-screens. For an electronic device with a foldable screen, when an application of the electronic device is started, a corresponding operating system displays the started application in a full-screen form or a split-screen form.

For example, if an electronic device with a foldable screen has only one folding shaft, after being folded along the folding shaft, the entire screen is folded and divided into two sub-screens that can display independently, for example, a first screen and a second screen. For another example, if an electronic device with a foldable screen has two folding axes, after being folded along the two folding axes, the entire screen is folded and divided into three sub-screens that can display independently, for example, a first screen, a second screen, and a third screen.

Correspondingly, there are two folding manners of the electronic device with the foldable screen: an outward folding manner and an inward folding manner. The outward folding manner may be understood as folding the foldable screen outward, and the inward folding manner may be understood as folding the foldable screen inward. Correspondingly, foldable screens may be classified into two types based on the folding manner. One type is a foldable screen in an outward folding manner (which is referred to as an outward-foldable screen for short), and the other type is a foldable screen in an inward folding manner (which is referred to as an inward-foldable screen for short).

In some examples, when a user makes a call by using an electronic device with a foldable screen, an outer screen of the electronic device with the foldable screen usually displays a black screen or simple text information (for example, a name of a caller), and a visual effect is monotonous.

It may be understood that an outer screen of an electronic device with a foldable screen may be understood as a screen that does not face a user when the user makes a call by using the electronic device with the foldable screen.

Therefore, an embodiment of this application provides a display method. An electronic device with a foldable screen receives a call request from another electronic device. The electronic device with the foldable screen connects, in response to a connection operation of a user, a call corresponding to the call request and displays a call motion effect on an outer screen of the electronic device with the foldable screen. The call motion effect is used to increase fun of the call, expresses call emotion of the user in a personalized manner, enhance user interaction experience, and improve user experience. In addition, more attention is attracted, and user retention is improved.

The display method provided in embodiments of this application may be applied to an electronic device with a foldable screen. The electronic device may also be referred to as a terminal equipment (terminal equipment), a terminal (terminal), user equipment (user equipment, UE), a mobile station (mobile station, MS), a mobile terminal (mobile terminal, MT), or the like.

For example, the electronic device with the foldable screen in this embodiment of this application may be an electronic device with a foldable screen, such as a foldable-screen mobile phone or a foldable-screen tablet computer. An operating system installed on the electronic device with the foldable screen includes but is not limited to iOS^{®}, Android^{®}, HarmonyOS^{®}, Windows^{®}, Linux^{®}, or another operating system. Both a specific type of the electronic device and an installed operating system are not specially limited in this application.

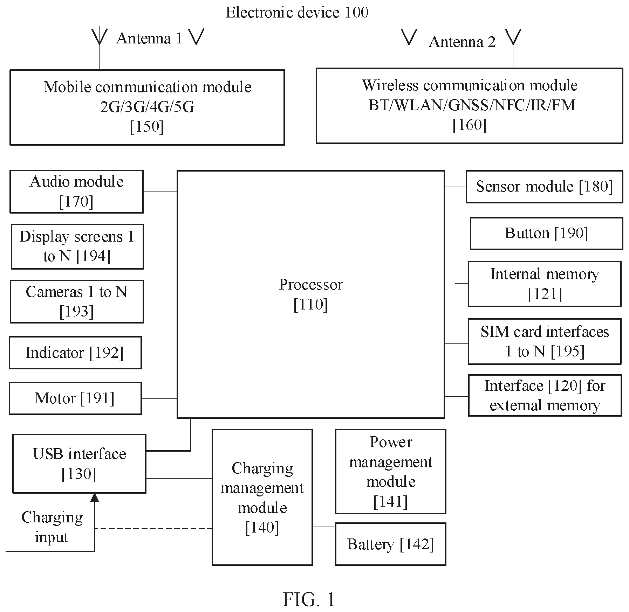

For example, FIG. 1 is a diagram of a hardware structure of an electronic device 100. The electronic device 100 includes a foldable screen, and the foldable screen includes a plurality of sub-screens. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display screen 194, a subscriber identity module (subscriber identity module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache, and may store instructions or data just used or cyclically used by the processor 110. If the processor 110 needs to use the instructions or data again, the instructions or data may be directly invoked from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to a peripheral component such as the display screen 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display screen 194 via the DSI, to implement a display function of the electronic device 100.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It can be understood that an interface connection relationship between modules illustrated in embodiments of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display screen 194. In some embodiments, the modem processor may be an independent component. In some other embodiments, the modem processor may be independent of the processor 110, and is disposed in a same component as the mobile communication module 150 or another functional module.

The wireless communication module 160 may provide a solution, applied to the electronic device 100, for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 of the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long-term evolution (long-term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation systems, SBAS).

The electronic device 100 may implement a display function by using the GPU, the display screen 194, the application processor, and the like. The GPU is a microprocessor for image processing, and is connected to the display screen 194 and the application processor. The GPU is configured to: perform mathematical and geometric computation and render an image. The processor 110 may include one or more GPUs that execute program instructions to generate or change display information.

The display screen 194 is configured to display an image, a video, and the like. The display screen 194 includes a display panel. The display panel may be made of a liquid crystal display (liquid crystal display, LCD), for example, an organic light-emitting diode (organic light-emitting diode, OLED), an active-matrix organic light-emitting diode or active-matrix organic light-emitting diode (active-matrix organic light-emitting diode, AMOLED), a flexible light-emitting diode (flex light-emitting diode, FLED), a mini-LED, a micro-LED, a micro-OLED, or a quantum dot light-emitting diode (quantum dot light-emitting diode, QLED). In some embodiments, the electronic device 100 may include N display screens 194, where N is a positive integer greater than 1.

The camera 193 is configured to capture a static image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various functional applications and data processing of the electronic device 100.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device 100 may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. The motor 191 may also correspond to different vibration feedback effects for touch operations performed on different areas of the display screen 194. Different application scenarios (for example, a time reminder, information receiving, an alarm clock, and a game) may also correspond to different vibration feedback effects.

The indicator 192 may be an indicator light, and may indicate a charging status and a power change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1.

The following uses an example in which an electronic device with a foldable screen is a foldable-screen mobile phone for description. The following describes in detail a display method in embodiments of this application by using specific embodiments and accompanying drawings. The following embodiments may be combined with each other, and same or similar concepts or processes may not be repeatedly described in some embodiments.

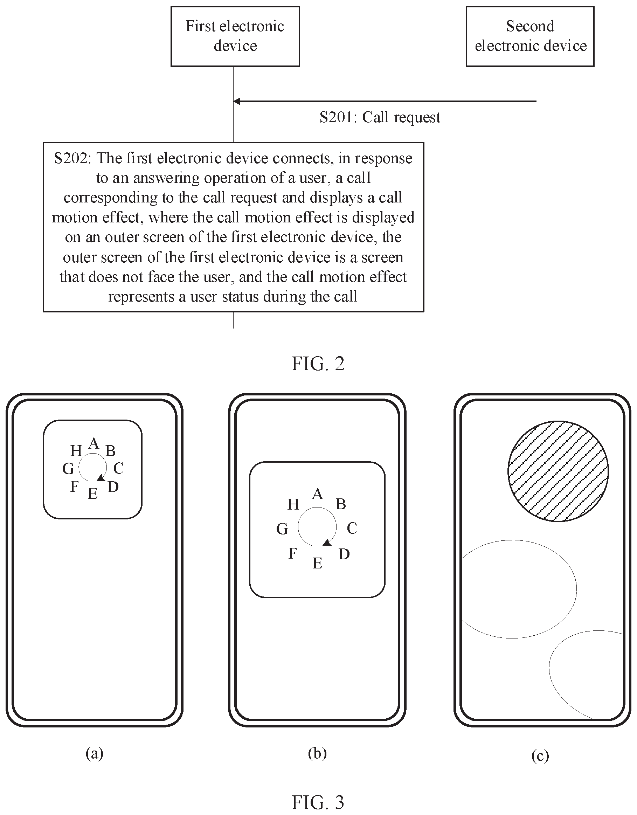

FIG. 2 is a schematic flowchart of a display method according to an embodiment of this application. It should be noted that the method is not limited to a specific sequence described in FIG. 2 and the following. It should be understood that, in another embodiment, a sequence of some steps in the method may be exchanged based on an actual requirement, or some steps in the method may be omitted or deleted. The method includes the following steps.

S201: A first electronic device receives a call request from a second electronic device.

In this embodiment of this application, the first electronic device is an electronic device that can implement a call function and has a foldable screen, for example, a foldable-screen mobile phone.

In this embodiment of this application, the second electronic device is an electronic device that can implement a call function. The second electronic device may be an electronic device with a foldable screen, or may be an electronic device with a non-foldable screen, for example, a mobile phone or a tablet computer.

In this embodiment of this application, the call request is a request that is initiated by the second electronic device to the first electronic device and that is intended to establish communication.

In this embodiment of this application, the call request includes but is not limited to a voice call request (for example, a phone voice call request, a voice call request initiated based on social software, or a voice call request initiated based on conference software), a video call request (for example, a phone video call request, a video call request initiated based on social software, or a video call request initiated based on conference software), and the like.

It may be understood that the call request in this embodiment of this application may be a single-user call request or may be a multi-user call request. The call request is not specially limited in this embodiment of this application.

In a possible implementation, the call request is the single-user call request, and there is one first electronic device and one second electronic device. The second electronic device sends the single-user call request to the first electronic device. Correspondingly, the first electronic device receives the single-user call request from the second electronic device.

In another possible implementation, the call request is the multi-user call request, there may be a plurality of first electronic devices, and there is one second electronic device. The second electronic device sends the multi-user call request to the plurality of first electronic devices. Correspondingly, each of the plurality of first electronic devices receives the multi-user call request from the second electronic device.

It may be understood that the multi-user call request indicates that the second electronic device sends the multi-user call request to the plurality of first electronic devices. However, during actual application, the second electronic device may send the multi-user call request to an electronic device with a foldable screen and an electronic device with a non-foldable screen. When the call request is the multi-user call request, the second electronic device may send the multi-user call request to a plurality of third electronic devices, where the third electronic devices include the first electronic device, and there may be one or more first electronic devices. Correspondingly, the plurality of third electronic devices receive the multi-user call request from the second electronic device. The first electronic device in the plurality of third electronic devices receives the multi-user call request from the second electronic device.

The following uses an example in which the call request is the single-user call request for description.

In some examples, the first electronic device receives a phone voice call request initiated by the second electronic device. For example, the second electronic device is a non-foldable-screen mobile phone, and the first electronic device is a foldable-screen mobile phone. The second electronic device sends the phone voice call request to the first electronic device in response to an operation in which a user dials a phone number of the first electronic device. Correspondingly, the first electronic device receives the phone voice call request from the second electronic device.

In some other examples, the first electronic device receives a video call request initiated by the second electronic device. For example, the second electronic device is a tablet computer, the first electronic device is a foldable-screen mobile phone, social software A is installed on both the first electronic device and the second electronic device, a user A uses the first electronic device, and a user B uses the second electronic device. The second electronic device sends a video call request to the first electronic device in response to an operation in which the user B triggers, by using the social software A, a video call with the user A. Correspondingly, the first electronic device receives, based on the social software A, the video call request from the second device.

In still some other examples, the first electronic device receives a video conference call request initiated by the second electronic device. For example, the second electronic device is a tablet computer, the first electronic device is a foldable-screen mobile phone, conference software A is installed on both the first electronic device and the second electronic device, the user A uses the first electronic device, and the user B uses the second electronic device. The user B invites, in the conference software A of the second electronic device, a plurality of users (for example, three users, one of which is the user A, and the conference software A is installed on an electronic device used by each user) to attend a conference video call. In response to the foregoing operation of the user B, the second electronic device separately sends the conference video call request to electronic devices used by the three users. Correspondingly, the electronic device used by each of the three users (including the first electronic device used by the user A) receives, based on the conference software A, the conference video call request from the second device.

S202: The first electronic device connects, in response to an answering operation of the user, a call corresponding to the call request and displays a call motion effect, where the call motion effect is displayed on an outer screen of the first electronic device, the outer screen of the first electronic device is a screen that does not face the user, and the call motion effect represents a user status during the call.

In this embodiment of this application, the answering operation includes an operation in which the user triggers to answer the call with the second electronic device.

In some embodiments of this application, the answering operation includes a preset shortcut operation, a preset voice command, or the like.

In some examples, the answering operation may be a shortcut operation performed by the user by using a gesture, a touch operation, a button combination, or the like, for example, an operation in which the user slides an answering control or touches an answering control on the foldable screen of the first electronic device.

In some other examples, the answering operation may alternatively be a voice command of the user. For example, a voice assistant delivers, to the first electronic device, a command for connecting the call with the second electronic device.

It may be understood that a specific implementation form of the answering operation is not limited in this embodiment of this application.

In this embodiment of this application, the call motion effect is a special effect or an animation effect displayed on the outer screen of the first electronic device when the first electronic device is on a call. The call motion effect can express a personality of a user, and the personality of the user can be understood as a personality characteristic of the user. For example, the personality of the user includes but is not limited to extroverted, introverted, rational, romantic, easygoing, and the like. The call motion effect may further represent a user status during a call. The user status may be understood as an emotion status of the user during a call, and reflects mood of the user during a call. For example, the user status includes but is not limited to happy, angry, nervous, bored, sad, and the like.

The call motion effect includes changing motion effect display information, and the display information includes display content, a display effect, and the like.

The display content includes text, an image, a graphic, a pattern, and the like. For example, the text includes at least one of the following: art font text (text in different fonts), three-dimensional text (text presenting a three-dimensional effect), geometric text (text designed based on a geometric shape), liquid text (text presenting a liquid flowing effect), and the like. The image includes at least one of the following: a figure image, an animal image, a landscape image, a drawing image, and the like. The graphic includes at least one of the following: a point, a line, a straight line, a curve, a circle, a polygon, a planar graphic, a three-dimensional graphic, and the like. The pattern includes at least one of the following: a particle special effect pattern (for example, twinkling stars or fluttering petals), a line special effect pattern (a rhythmic pattern formed by combining lines of different colors, different shapes, and different movement manners), a geometrical pattern special effect (a pattern constructed by geometric structures of different shapes, for example, a translating square), a light-and-shadow special effect pattern (a three-dimensional pattern created based on light and shadow), and a virtual-reality special effect pattern (a special effect pattern that simulates three-dimensional space through layering and perspective).

The display effect includes a dynamic display effect of the display content. For example, the dynamic display effect includes at least one of the following: an appearance effect, an in-process effect, an end effect, and the like of the display content. For example, the appearance effect includes animation effects such as a transition animation, a gradient animation, a fly-in animation, and a scene-transition animation. The in-process effect includes a size change (for example, scaling up or down), a location change (for example, rotation or translation), a color change (for example, changing a color of a motion effect), a shape change (for example, changing a shape of a motion effect), a transparency change (for example, changing transparency to display a motion effect or make a motion effect disappear), a blur degree change (for example, changing a blur degree to make a motion effect represent a clear effect or a blur effect), and the like. The end effect includes animation effects such as a transition animation, a gradient animation, an extinguishing animation, a fade-out animation, and a scene-transition animation.

Optionally, the call motion effect further includes static display information, for example, static text or images.

It should be understood that the call motion effect may include the dynamic display information and/or the static display information. The call motion effect is not specially limited in this application.

For example, if the call motion effect is fluttering petals, it indicates that the personality of the user is romantic, and the user status is happy. If the call motion effect is a rolling data stream, it indicates that the personality of the user is rational, and the user status is bored.

For example, the call motion effect includes a display motion effect shown in FIG. 3. As shown in (a) in FIG. 3 and (b) in FIG. 3, the call motion effect is formed by text of different colors, and the text rotate clockwise. It may be understood that, when the call motion effect is displayed, only the text is displayed, and arrows in (a) in FIG. 3 and (b) in FIG. 3 are merely used to indicate a text rotation direction. As shown in (c) in FIG. 3, the call motion effect includes graphics of different sizes, and a change effect in the call motion effect is gradient display.

It may be understood that the call motion effect may be a display motion effect including only one motion effect, or may be a display motion effect formed by combining a plurality of motion effects.

It may be understood that the foregoing call motion effect classification is performed based on basic composition units and a display effect of the call motion effect. The call motion effect in this embodiment of this application may be further classified based on an aesthetic style, for example, a cute call motion effect, a cool call motion effect, a fresh call motion effect, a natural call motion effect, an elegant call motion effect, and a dreamy call motion effect. The call motion effects in this embodiment of this application may be further classified based on colors. A specific representation form and a specific classification form of the call motion effect are not limited in this embodiment of this application.

Optionally, the call motion effect may be displayed at any location on the outer screen of the first electronic device, and as shown in (a) in FIG. 3, the call motion effect may be displayed in an upper area of the outer screen. Alternatively, as shown in (b) in FIG. 3, the call motion effect may be displayed in a middle area of the outer screen.

Optionally, a display size of the call motion effect is related to a shape of the outer screen and a size of the outer screen. The shape of the outer screen may be a rectangle, a square, a circle, or the like. The user can customize the display size of the call motion effect. For example, as shown in (a) in FIG. 3 and (b) in FIG. 3, the call motion effect is displayed in an area of the outer screen, and as shown in (c) in FIG. 3, the call motion effect fills the entire outer screen. Display content, a display location, a display size, a display manner, and the like of the call motion effect are not limited in this embodiment of this application.

In some embodiments of this application, the call motion effect may be a display motion effect that is pre-configured in the first electronic device and displayed when the device is on a call.

In some examples, a plurality of call motion effects are pre-configured in the first electronic device, to allow the user to select.

In some other embodiments of this application, the call motion effect may alternatively be a display motion effect that is customized by the user and displayed when the device is on a call.

In some examples, the first electronic device provides a function of customizing the call motion effect. In the function, the first electronic device provides some display motion effect templates, so that the user makes a call motion effect by himself/herself (do it yourself, DIY).

Specifically, the user may customize a call motion effect based on a use requirement, an application scenario, or a preference of the user, and customize display content (such as a background, text, a pattern, a special effect, and an animation), a display location, a display size, and the like of the call motion effect.

For example, the user first determines a type and a style of the call motion effect, and then selects various motion effect elements in the call motion effect. For example, when the user designs a lively-style call motion effect, the user may select brightly colored emojis, patterns, or text from uploaded elements such as images, videos, emojis, text, and patterns, select a lively motion effect, and combine the selected brightly colored emojis, patterns, or text and the selected lively motion effect to generate the call motion effect. For another example, when the user designs a simple-style call motion effect, the user may customize text information, select a simple motion effect (for example, a gradient motion effect), and combine the text information and the simple motion effect to generate the call motion effect.

In an implementation of this application, the first electronic device sets a same call motion effect for different second electronic devices. In this way, the first electronic device uses the same call motion effect, so that the call motion effect is displayed when the first electronic device is on a call with different second electronic devices. This simplifies a user operation.

In another implementation of this application, the first electronic device respectively sets different call motion effects for different second electronic devices. In this way, the first electronic device displays different call motion effects based on different second electronic devices, so that fun of a call is increased, and user experience is improved.

In this application, the first electronic device may provide rich and diversified call motion effects, so that the first electronic device becomes more interesting during a call and can attract more attention, and user retention is improved. In addition, a vivid, natural, and expressive visual motion effect is used, so that sensory experience of the user can be enhanced, and user experience can be improved.

In an implementation of this application, the user may further set a keyword, a rhythm speed, and/or the like for the call motion effect.

In this embodiment of this application, after the first electronic device connects, in response to the answering operation of the user, the call corresponding to the call request and displays the call motion effect, the method further includes: The first electronic device obtains a call voice of the user and adjusts the call motion effect based on the call voice.

In some examples, the first electronic device obtains the call voice of the user and adjusts the call motion effect based on a speed or volume of the call voice, or a keyword in the call voice.

For example, when the user speaks a keyword during a call, an effect of presenting a call motion effect is enhanced (for example, being scaled up or undergoing color change). Alternatively, when a speaking speed of the user during a call increases, rhythm of the call motion effect also gradually accelerates. Alternatively, when a speaking speed of the user during a call decreases, rhythm of the call motion effect also gradually slows down.

In some other examples, the first electronic device obtains the call voice of the user and adjusts the call motion effect by using a voice analysis technology.

For example, the first electronic device obtains the call voice of the user, infers the emotion status of the user based on the voice analysis technology such as an emotion recognition algorithm or natural language processing, and adjusts the call motion effect based on the emotion status of the user. For example, when it is recognized, based on the call voice of the user, that the emotion status of the user changes from happy to sad, the call motion effect displayed on the outer screen also changes from a smiling motion effect to a crying motion effect. The call motion effect changes in real time with emotion of the user, to represent mood of the user.

It may be understood that the call motion effect in this embodiment of this application may be dynamically changed based on specific content and/or a voice speed of the user during a call. A rhythm effect of the call motion effect should match the voice speed of the user.

In this application, the call motion effect is adaptively adjusted based on a specific call status (the call content and/or the voice speed) of the user, and a speed and rhythm of the call motion effect are changed, so that emotion of the user during a call and personality of the user can be vividly and expressively indicated, and fun of a call can be increased.

In this embodiment of this application, the outer screen of the first electronic device is a screen that does not face the user.

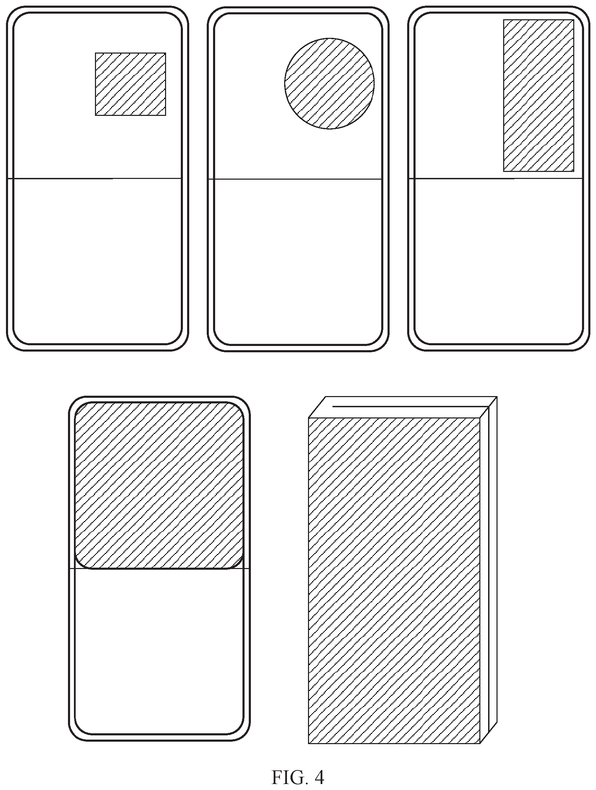

For example, FIG. 4 shows outer screens of different types of first electronic devices, and shadow areas are call motion effects displayed on the outer screens of the first electronic devices (the call motion effects in FIG. 4 fill the entire outer screens). A shape and a size of the outer screen are not limited in this embodiment of this application. The outer screen is not specially limited in this application.

In this embodiment of this application, the first electronic device includes a first screen and a second screen, the first screen and the second screen face away from each other, and the user faces the first screen. In this case, that the first electronic device connects the call corresponding to the call request and displays the call motion effect includes: The first electronic device connects the call corresponding to the call request, the first screen displays a call interface, and the second screen displays the call motion effect. The second screen is the outer screen of the first electronic device.

In an implementation of this application, when the user uses the first electronic device to make a call, if the first electronic device is in an unfolded state, an entire foldable screen (namely, the first screen) faces the user. If a screen (namely, the second screen) is further disposed on a surface that faces away from the user, the screen (namely, the second screen) that is of the first electronic device and that faces away from the user is the outer screen of the first electronic device. The first screen facing the user displays the call interface (for example, a voice call interface or a video call interface), and the outer screen (namely, the second screen) facing way from the user displays the call motion effect.

In some examples, the first electronic device is an electronic device including an inward-foldable screen, and a display screen is further disposed on a back surface of the inward-foldable screen in the first electronic device. In this way, when the user makes a call by using the electronic device with the inward-foldable screen that is in an unfolded state, the display screen disposed on the back surface displays the call motion effect.

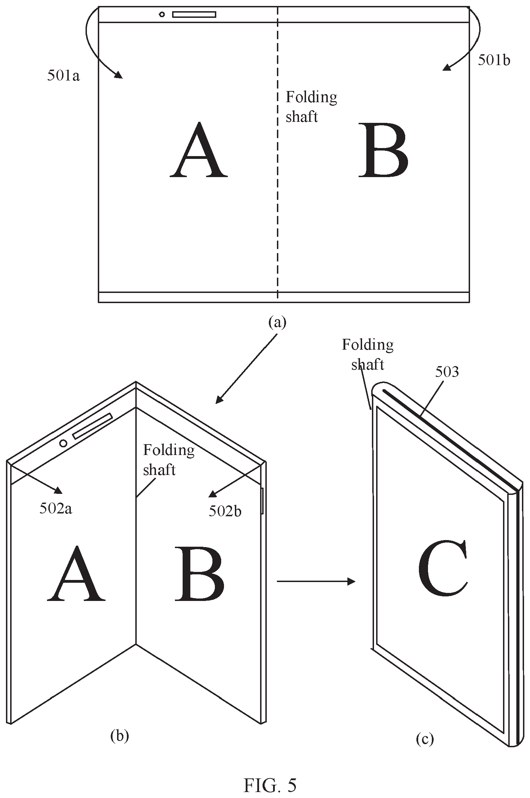

For example, as shown in FIG. 5, (a) in FIG. 5 is a diagram of a form of an inward-foldable screen that is completely unfolded. In this case, the inward-foldable screen is in an unfolded state, all areas (a screen A and a screen B) of the inward-foldable screen may be used to display data, and a display screen C is disposed on a back surface of the screen A and may also be used to display data (screen C is not shown in (a) in FIG. 5). The inward-foldable screen may be folded along a folding shaft in directions 501a and 501b shown in (a) in FIG. 5 (folding inward means that a screen that can display data is folded inward), to form the screen A and the screen B shown in (b) in FIG. 5, and the screen A and the screen B gradually approach each other. The inward-foldable screen may continue to be folded along the folding shaft in the directions 502a and 502b shown in (b) in FIG. 5, to form the inward-foldable screen that is in a folded state shown in (c) in FIG. 5. As shown in (c) in FIG. 5, after the foldable screen of the electronic device is completely folded, the screen A and the screen B face each other and are invisible to the user. The screen C facing away from the screen A is visible to the user, and may be further used to display data. A black line 503 shown in (c) in FIG. 5 is a line on a contact surface of the screen A and the screen B after the screen A is in contact with the screen B. In this case, the inward-foldable screen is in the folded state. In this way, the inward-foldable screen is switched from the unfolded state to the folded state. Correspondingly, the inward-foldable screen may alternatively be switched from the folded state to the unfolded state, and details are not described herein again.

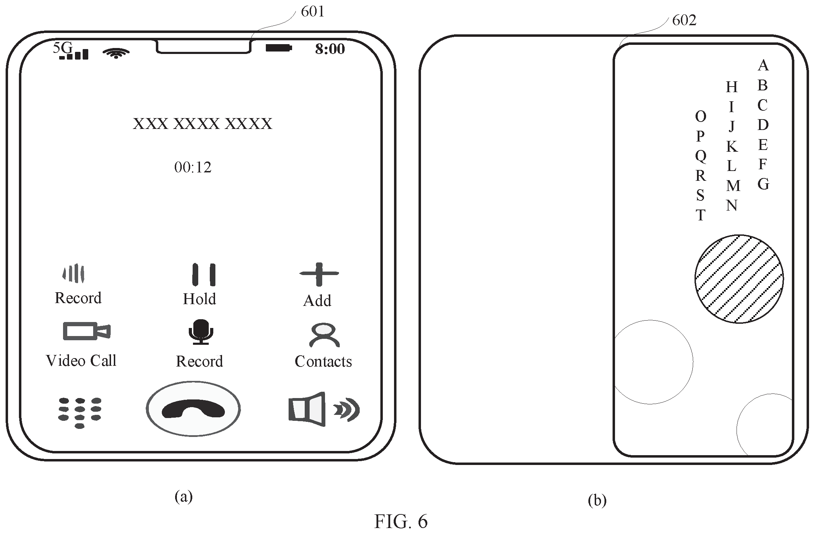

For example, if the user uses the electronic device that is in the unfolded state shown in FIG. 5 to make a call, as shown in (a) in FIG. 6, the screen A and the screen B in the electronic device face the user and display a call interface 601; and as shown in (b) in FIG. 6, the screen C, facing away from the user, in the electronic device displays a call motion effect 602, where the call motion effect 602 includes both a text motion effect and a graphic motion effect.

In another implementation of this application, when the user uses the first electronic device to make a call, if the first electronic device is in the folded state, a part of the foldable screen (for example, a primary screen or a secondary screen) (namely, the first screen) faces the user. If there is still a screen (namely, the second screen) on a surface that faces away from the user, the screen (namely, the second screen) that is of the first electronic device and that faces away from the user is the outer screen of the first electronic device. The first screen facing the user displays the call interface (for example, the voice call interface or the video call interface), and the outer screen (namely, the second screen) facing way from the user displays the call motion effect.

It may be understood that the primary screen and the secondary screen may be set by a developer before the electronic device with the foldable screen is delivered from a factory. There is one primary screen of the electronic device with the foldable screen, and there may be one or more secondary screens.

In some examples, the first electronic device is an electronic device including an outward-foldable screen. When the user makes a call by using the electronic device with the outward-foldable screen that is in a folded state, a sub-screen facing the user displays the call interface, and a sub-screen facing away from the user displays the call motion effect.

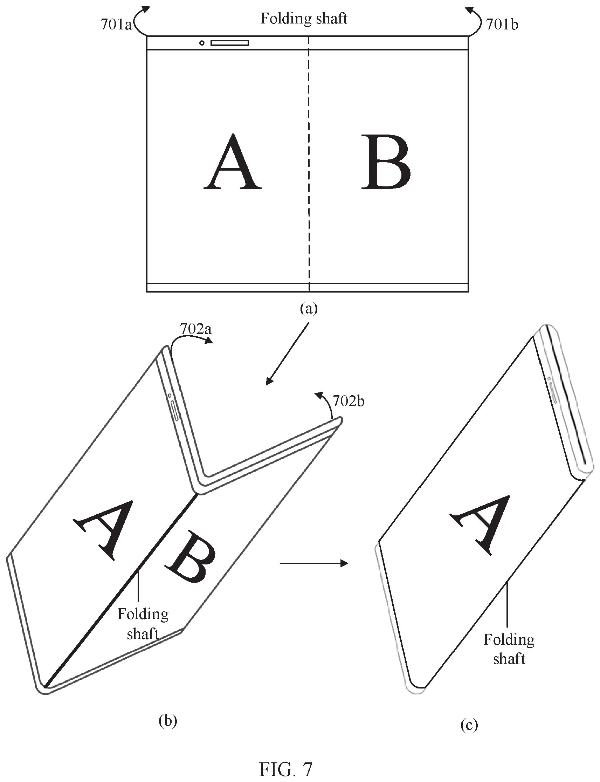

For example, as shown in FIG. 7, (a) in FIG. 7 is a diagram of a form of an outward-foldable screen that is completely unfolded. In this case, the outward-foldable screen is in an unfolded state, and all areas (a screen A and a screen B) of the outward-foldable screen may be used to display data. The outward-foldable screen may be folded along a folding shaft in directions 701a and 701b shown in (a) in FIG. 7 (folding outward means folding toward a back surface of a screen that can display data), to form the screen A and the screen B shown in (b) in FIG. 7. The outward-foldable screen may continue to be folded along the folding shaft in the directions 702a and 702b shown in (b) in FIG. 7, to form the outward-foldable screen that is in the folded state shown in (c) in FIG. 7. As shown in (c) in FIG. 7, after the foldable screen of the electronic device is completely folded, the screen A and the screen B face away from each other, the screen A is visible to the user, and the screen B is invisible to the user. In this case, the outward-foldable screen is in the folded state, and a sub-screen (for example, the screen A or the screen B) obtained after the outward-foldable screen is folded may be used to display data. In this way, the outward-foldable screen is switched from the unfolded state to the folded state. Correspondingly, the outward-foldable screen may alternatively be switched from the folded state to the unfolded state, and details are not described herein again.

For example, if the user uses the electronic device that is in the folded state shown in FIG. 7 to make a call, as shown in (c) in FIG. 7, the screen A in the electronic device faces the user and displays the call interface, and the screen B in the electronic device faces away from the user and displays the call motion effect.

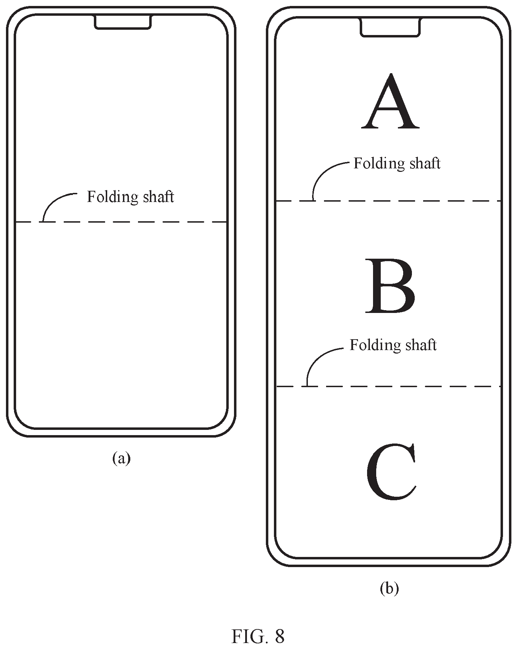

It should be noted that a folding manner of the electronic device with the foldable screen may be left-right folding shown in FIG. 5 or FIG. 7, or may be up-down folding shown in FIG. 8. A folding manner of a foldable-screen device is not limited in this embodiment of this application. In addition, there may be one folding shaft corresponding to the foldable-screen device as shown in FIG. 5 or FIG. 7 and as shown in (a) in FIG. 8. A quantity of folding axes may alternatively be a value greater than 1, for example, there may be two folding axes as shown in (b) in FIG. 8. A specific form of the electronic device with the foldable screen is not specially limited in this embodiment of this application.

For example, based on the electronic device with the foldable screen shown in (b) in FIG. 8, if the electronic device with the foldable screen is in the folded state (the screen C is folded backward along the folding shaft) during a call, sub-screens facing the user are the screen A and the screen B and display the call interface; and a sub-screen facing away from the user is the screen C and displays the call motion effect.

It should be understood that, that the sub-screen or the entire screen in this embodiment of this application faces the user includes: the sub-screen or the entire flexible screen faces the user at an angle that is essentially parallel to the face of the user, and include: the sub-screen or the entire flexible screen faces the user at a specific tilt angle.

It should be understood that a screen that does not face the user in this embodiment of this application includes a screen that does not face the face of the user, for example, a screen facing away from the face of the user after the electronic device with the foldable screen is folded.

It should be understood that an audio module is disposed on both the first electronic device and the second electronic device in this embodiment of this application, and the audio module is configured to implement a voice call function. For example, the audio module includes a speaker, a microphone, an audio codec, a headset jack, a Bluetooth connection, a digital signal processor (digital signal processor, DSP), an audio driver, and the like. The first electronic device and the second electronic device in this embodiment of this application may further include a video module, and the video module is configured to implement a video interaction function. For example, the video call module includes a camera, a display screen video codec, a video processor, a video input/output interface, a video driver, and the like. In this embodiment of this application, the display screen of the first electronic device is a foldable screen, and the display screen of the second electronic device may be a foldable screen or a non-foldable screen.

It may be understood that, in all the foregoing examples, an example in which when the first electronic device connects a call, the user holds the first electronic device, and a screen of the first electronic device faces the user is used for description. In addition, in actual application, there is still a scenario in which the user does not face the first electronic device. The following describes a call scenario in which the user does not face the first electronic device.

In this embodiment of this application, the user does not face the first electronic device, and that the first electronic device connects the call corresponding to the call request and displays the call motion effect includes: The first electronic device connects the call corresponding to the call request, where a currently displayed screen of the first electronic device first displays the call interface and then displays the call motion effect; and the currently displayed screen is the outer screen of the first electronic device.

In still another implementation of this application, when the first electronic device connects the call corresponding to the call request, and the user does not face the first electronic device, the outer screen of the first electronic device is the currently displayed screen of the first electronic device. The currently displayed screen of the first electronic device first displays the call interface and then displays the call motion effect.

It may be understood that, for a video call, the user usually needs to face the first electronic device, to watch a video transmitted by the second electronic device to make a communication call. However, for a voice call, the user may hold the first electronic device close to an ear to complete the call, or the user may complete the call through a headset.

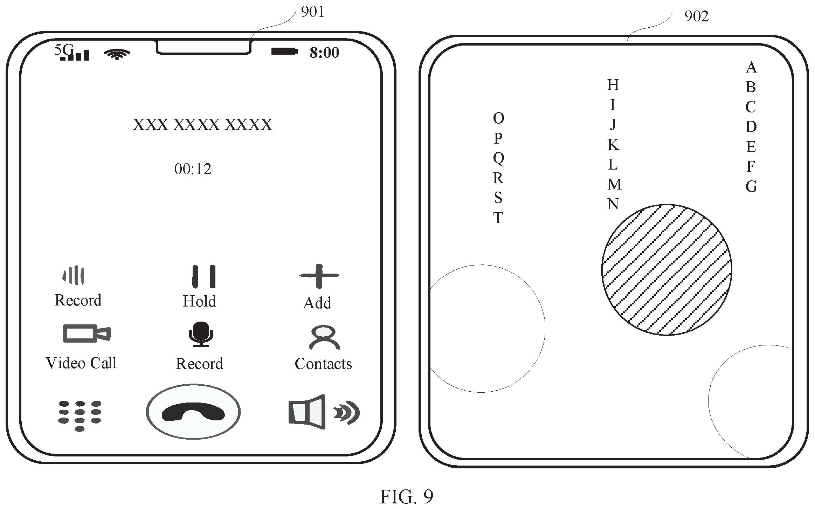

For example, as shown in FIG. 9, the first electronic device is placed on a desk in an unfolded state, and the user connects to the first electronic device through the headset. After receiving the call request from the second electronic device, the first electronic device displays a call request interface. The user touches an answering control (that is, the answering operation) on the call request interface to receive the call request of the second electronic device. The first electronic device connects, in response to the answering operation of the user, the call corresponding to the call request, and the first electronic device first displays a call interface 901 and then displays a call motion effect 902. If the user picks up, during the call, the first electronic device that is in the unfolded state and faces the first electronic device, a screen facing the user displays the call interface, and a screen facing away from the user displays the call motion effect.

It should be understood that, during the call, the outer screen of the first electronic device dynamically changes depending on whether the first electronic device faces the user.

In this application, during the call, the call motion effect dynamically changes with a manner in which the user uses the first electronic device and is more flexible.

In this embodiment of this application, the first electronic device determines a posture of the first electronic device; and determines, based on a correspondence between the posture of the first electronic device and the outer screen of the first electronic device, the outer screen of the first electronic device.

In this embodiment of this application, the first electronic device stores the correspondence between the posture of the first electronic device and the outer screen of the first electronic device.

It may be understood that, when the user uses the first electronic device to make a call, a location or an orientation of the first electronic device changes along with a hand movement of the user, and the posture of the first electronic device dynamically changes along with use of the user. Correspondingly, the outer screen of the first electronic device also dynamically changes with use of the user.

In some embodiments of this application, the first electronic device determines the posture of the first electronic device by using a sensor, and determines, based on the correspondence between the posture of the first electronic device and the outer screen of the first electronic device, the outer screen of the first electronic device corresponding to a current posture.

In some examples, a plurality of gyroscope sensors, a plurality of acceleration sensors, and a plurality of magnetic sensors may be disposed on the first electronic device. For example, one gyroscope sensor, one acceleration sensor, and one magnetic sensor are disposed on each independently displayable sub-screen of the first electronic device. A specific orientation of the foldable-screen device may be further identified with reference to another sensor (for example, a camera is turned on to detect whether facial information is captured), to further accurately determine the outer screen of the first electronic device.

In a possible implementation, the first electronic device determines the posture of the first electronic device based on data detected by the sensor and then determines the outer screen of the first electronic device.

In some examples, the first electronic device determines the posture of the first electronic device based on an angular velocity detected by the gyroscope sensor, acceleration detected by the acceleration sensor, and a magnetic flux detected by the magnetic sensor, and then determines the outer screen of the first electronic device based on the posture of the first electronic device.

For example, as shown in FIG. 5, the first electronic device includes a folding shaft and is divided into a primary screen (for example, the screen A) and a secondary screen (for example, the screen B) after being folded along the folding shaft. Another secondary screen (for example, the screen C) is disposed on the back surface of the screen A. The posture of the first electronic device includes a posture in which the primary screen faces upward, a posture in which the secondary screen faces upward, a posture in which a large screen faces upward, a posture in which the primary screen faces the user, a posture in which the secondary screen faces the user, and a posture in which the large screen faces the user.

The posture in which the primary screen faces upward may be understood as that the first electronic device is placed on the desk after being folded, and the screen A faces upward. The posture in which the secondary screen faces upward may be understood as that the first electronic device is placed on the desk after being folded, and the screen B or the screen C faces upward. The posture in which the large screen faces upward may be understood as that the first electronic device is unfolded and placed on the desk, and the screen A and the screen B face upward. The posture in which the primary screen faces the user may be understood as that the user holds the first electronic device that is in the folded state, the screen A faces the user, and the screen B faces away from the user. The posture in which the secondary screen faces the user may be understood as that the user holds the first electronic device that is in the folded state, the screen B faces the user, and the screen A faces away from the user. The posture in which the large screen faces the user may be understood as that the user holds the first electronic device that is in the unfolded state, the screen A and the screen B face the user, and the screen C faces away from the user.

For example, based on the foregoing examples, if the first electronic device determines, based on the data detected by the sensor, that the posture (that is, the current posture) of the first electronic device is the posture in which the primary screen faces upward, it is determined that the outer screen of the first electronic device is the screen A. When the first electronic device connects the call with the second electronic device, the screen A of the first electronic device first displays the call interface and then displays the call motion effect. Alternatively, if the first electronic device determines, based on the data detected by the sensor, that the posture of the first electronic device is the posture in which the secondary screen (the screen B or the screen C) faces upward, it is determined that the outer screen of the first electronic device is the screen B or the screen C. When the first electronic device connects the call with the second electronic device, the screen B or the screen C of the first electronic device first displays the call interface and then displays the call motion effect. Alternatively, if the first electronic device determines, based on the data detected by the sensor, that the posture of the first electronic device is the posture in which the large screen faces upward, it is determined that the outer screen of the first electronic device is the large screen (the screen A and the screen B). When the first electronic device connects the call with the second electronic device, the screen A and the screen B of the first electronic device first display the call interface and then display the call motion effect. Alternatively, if the first electronic device determines, based on the data detected by the sensor, that the posture of the first electronic device is the posture in which the primary screen faces the user, it is determined that the outer screen of the first electronic device is the screen B. When the first electronic device connects the call with the second electronic device, the screen A of the first electronic device displays the call interface, and the screen B displays the call motion effect. Alternatively, if the first electronic device determines, based on the data detected by the sensor, that the posture of the first electronic device is the posture in which the secondary screen faces the user, and the screen facing the user is the screen B, it is determined that the outer screen of the first electronic device is the screen A. When the first electronic device connects the call with the second electronic device, the screen B of the first electronic device displays the call interface, and the screen A displays the call motion effect. Alternatively, if the first electronic device determines, based on the data detected by the sensor, that the posture of the first electronic device is the posture in which the large screen (the screen A and the screen B) faces the user, it is determined that the outer screen of the first electronic device is the screen C. When the first electronic device connects the call with the second electronic device, the screen A and the screen B of the first electronic device display the call interface, and the screen C displays the call motion effect.

It may be understood that, if the posture of the first electronic device is the posture in which the secondary screen faces the user, and the screen facing the user is the screen C, because there is no display screen on the back surface of the screen C, when the first electronic device and the second electronic device are on a call, the first electronic device does not display the call motion effect.

In some other examples, the first electronic device may determine, by using a current touch location that is of the user and that is reported by a touch component and by using a preset grip algorithm, a grip posture with which the user currently grips a mobile phone, and determine the posture of the first electronic device based on the grasp posture. The outer screen of the first electronic device is determined based on the posture of the first electronic device.

It may be understood that for a specific implementation of determining the outer screen of the first electronic device, refer to descriptions of a conventional technology. Details are not described herein again.

In this application, the outer screen of the first electronic device is quickly determined based on the current posture of the first electronic device, so that a call motion effect display speed can be increased, and quick display can be implemented.

It should be understood that, in this application, the call motion effect is displayed on the outer screen of the first electronic device without affecting call display of the first electronic device. The call motion effect increases fun of a call is increased, externalizes call emotion, and enhances user interaction experience. In addition, when the first electronic device is on a call, the outer screen displays a motion effect, and a vivid motion effect brings stronger visual attraction to another user. The another user may learn call emotion of the user through the call motion effect displayed on the outer screen of the first electronic device.

According to the foregoing process, in this embodiment of this application, during a call between the first electronic device and the second electronic device, the outer screen of the first electronic device displays the call motion effect. In this way, when the electronic device with the foldable screen makes a call, the call motion effect displayed on the outer screen increases interest, expresses call emotion of the user in a personalized manner, enhances user interaction experience, and attracts more attention.

It may be understood that the system architecture and the service scenario described in this application are intended to describe the technical solutions in this application more clearly, and do not constitute a unique limitation on the technical solutions provided in this application. A person of ordinary skill in the art may learn that, with evolution of the system architecture and emergence of new service scenarios, the technical solutions provided in this application are also applicable to similar technical problems.

It may be understood that, to implement the foregoing functions, the electronic device includes a corresponding hardware structure and/or software module for performing each function. A person skilled in the art should be easily aware that, in combination with the examples described in the embodiments disclosed in this specification, units, algorithms, and steps can be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

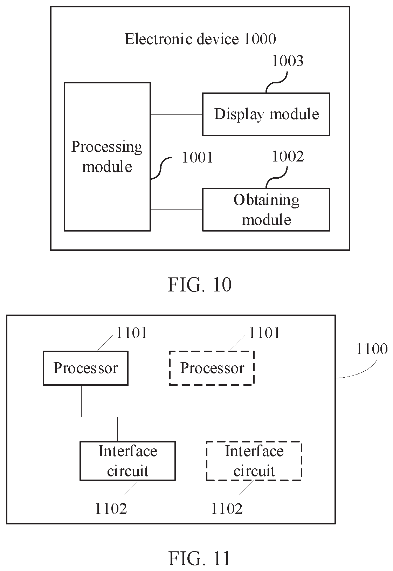

FIG. 10 is a diagram of a structure of another electronic device according to an embodiment of this application. The electronic device 1000 may be configured to implement the method recorded in the foregoing method embodiment. For example, the electronic device 1000 may specifically include a processing module 1001, an obtaining module 1002, and a display module 1003.

The processing module 1001 is configured to perform a processing function in supporting the electronic device 1000 to perform any item in FIG. 2.

The obtaining module 1002 is configured to perform an obtaining function in supporting the electronic device 1000 to perform any one item in FIG. 2.

The display module 1003 includes a foldable screen, and the display module 1003 is configured to perform a display function in supporting the electronic device 1000 to perform any item in FIG. 2. In this embodiment of this application, the display module 1003 is configured to display a call motion effect.

Optionally, the electronic device 1000 shown in FIG. 10 may further include a communication module (not shown in FIG. 10). The communication module is configured to support the electronic device 1000 to perform a step of communication between the electronic device and another electronic device in this embodiment of this application.

Optionally, the electronic device 1000 shown in FIG. 10 may further include a storage module (not shown in FIG. 10), and the storage module stores a program or instructions. When the processing module 1001 executes the program or the instructions, the electronic device 1000 shown in FIG. 10 can be enabled to perform the method shown in the foregoing method embodiment.

For technical effects of the electronic device 1000 shown in FIG. 10, refer to technical effects of the method in the foregoing method embodiment. Details are not described herein again. The processing module 1001 in the electronic device 1000 shown in FIG. 10 may be implemented by a processor or a processor-related circuit component, and may be a processor or a processing module. The communication module may be implemented by a transceiver or a transceiver-related circuit component, and may be a transceiver or a transceiver module. The display module 1003 may be implemented by a display screen-related component.

An embodiment of this application further provides a chip system. As shown in FIG. 11, the chip system 1100 includes at least one processor 1101 and at least one interface circuit 1102. In an example, when the chip system 1100 includes one processor and one interface circuit, the processor may be a processor 1101 shown in a solid line box (or a processor 1101 shown in a dashed box) in FIG. 11, and the interface circuit may be an interface circuit 1102 shown in a solid line box (or an interface circuit 1102 shown in a dashed box) in FIG. 11. When the chip system 1100 includes two processors and two interface circuits, the two processors include a processor 1101 shown in a solid line box and a processor 1101 shown in a dashed box in FIG. 11, and the two interface circuits include an interface circuit 1102 shown in a solid line box and an interface circuit 1102 shown in a dashed box in FIG. 11. This is not limited.

The processor 1101 and the interface circuit 1102 may be interconnected through a line. For example, the interface circuit 1102 may be configured to receive a signal. For another example, the interface circuit 1102 may be configured to send a signal to the another apparatus (for example, the processor 1101). For example, the interface circuit 1102 may read instructions stored in a memory, and send the instructions to the processor 1101. When the instructions are executed by the processor 1101, the steps in the foregoing embodiments may be performed. Certainly, the chip system may further include another discrete component. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, the chip system may further include a memory (shown in FIG. 11). Alternatively, there may be one or more memories. The memory may be integrated with the processor, or may be disposed separately from the processor. This is not limited in this application. For example, the memory may be a non-transitory processor, for example, a read-only memory (read-only memory, ROM). The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system-on-chip (system-on-chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

It should be understood that the steps in the foregoing method embodiment may be completed by using an integrated logic circuit of hardware in the processor or instructions in a form of software. The steps of the method disclosed with reference to embodiments of this application may be directly performed by a hardware processor, or may be performed by using a combination of hardware in the processor and a software module.

An embodiment of this application further provides a computer storage medium. The computer storage medium stores computer instructions. When the computer instructions are run on an electronic device, the electronic device is enabled to perform the method in the foregoing method embodiment.

The computer-readable storage medium includes but is not limited to any one of the following: various media that can store program code, such as a USB flash drive, a removable hard disk, a read-only memory (read-only memory, ROM), a random access memory (random access memory, RAM), a magnetic disk, or an optical disc.

An embodiment of this application provides a computer program product. The computer program product includes a computer program or instructions. When the computer program or the instructions are run on a computer, the computer is enabled to perform the method in the foregoing method embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiment.

The electronic device, the computer storage medium, the computer program product, or the chip provided in this embodiment is configured to perform the corresponding method provided above. Therefore, for beneficial effects that can be achieved, refer to beneficial effects of the corresponding method provided above. Details are not described herein again.

Methods or algorithm steps described with reference to content disclosed in embodiments of this application may be implemented by hardware, or may be implemented by a processor executing software instructions. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. In actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiment, and details are not described herein again.

In the several embodiments provided in this application, it should be understood that the disclosed apparatus and method may be implemented in other manners. When no conflict occurs, embodiments may be combined or referenced with each other. The described apparatus embodiment is merely an example. For example, division into the modules or the units is merely logical function division, and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of this embodiment.

In addition, functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A display method, applied to a first electronic device, wherein the first electronic device is an electronic device with a foldable screen, and the method comprises:
receiving, by the first electronic device, a call request from a second electronic device; and
connecting, by the first electronic device in response to an answering operation of a user, a call corresponding to the call request and displaying a call motion effect, wherein the call motion effect is displayed on an outer screen of the first electronic device, the outer screen of the first electronic device is a screen that does not face the user, and the call motion effect represents a user status during the call.

2. The method according to claim 1, wherein the first electronic device comprises a first screen and a second screen, the first screen and the second screen face away from each other, and the user faces the first screen; and
connecting, by the first electronic device, the call corresponding to the call request and displaying the call motion effect comprise:
connecting, by the first electronic device, the call corresponding to the call request, displaying a call interface by using the first screen, and displaying the call motion effect by using the second screen, wherein the second screen is the outer screen of the first electronic device.

3. The method according to claim 1, wherein a user does not face the first electronic device, and connecting, by the first electronic device, the call corresponding to the call request and displaying the call motion effect comprise:
connecting, by the first electronic device, the call corresponding to the call request, wherein a currently displayed screen of the first electronic device first displays a call interface and then displays the call motion effect, and the currently displayed screen is the outer screen of the first electronic device.

4. The method according to any one of claims 1 to 3, wherein the method further comprises:
determining a posture of the first electronic device; and
determining, based on a correspondence between the posture of the first electronic device and the outer screen of the first electronic device, the outer screen that is of the first electronic device and that corresponds to a current posture.

5. The method according to any one of claims 1 to 4, wherein after connecting, by the first electronic device in response to the answering operation of the user, the call corresponding to the call request and displaying the call motion effect, the method further comprises:
obtaining a call voice of the user, and adjusting the call motion effect based on the call voice.

6. The method according to any one of claims 1 to 5, wherein the call motion effect is a display motion effect that is pre-configured in the first electronic device and displayed when the device is on a call; or the call motion effect is a display motion effect that is customized by the user and displayed when the device is on a call.

7. The method according to any one of claims 1 to 6, wherein the first electronic device displays different call motion effects based on different second electronic devices.

8. An electronic device, comprising a processor, a memory, and a display screen, wherein the memory and the display screen are coupled to the processor, the memory is configured to store computer program code, the computer program code comprises computer instructions, and when the processor reads the computer instructions from the memory, the electronic device is enabled to perform the method according to any one of claims 1 to 7.

9. A chip system, comprising at least one processor and at least one interface circuit, wherein the at least one interface circuit is configured to: implement a transceiver function and send instructions to the at least one processor, and when the at least one processor executes the instructions, the at least one processor performs the method according to any one of claims 1 to 7.

10. A computer-readable storage medium, wherein the computer-readable storage medium comprises a computer program or instructions, and when the computer program or the instructions are run on a computer, the computer is enabled to perform the method according to any one of claims 1 to 7.

11. A computer program product, wherein the computer program product comprises a computer program or instructions; and when the computer program or the instructions are run on a computer, the computer is enabled to perform the method according to any one of claims 1 to 7.
